# EUROPÄISCHE PATENTSCHRIFT

(11) **EP 0 916 057 B1**
(45) Veröffentlichungstag und Bekanntmachung des Hinweises auf die Patenterteilung: **16.05.2001**
(21) Anmeldenummer: 97937529.2
(22) Anmeldetag: 30.07.1997
(51) Int. Cl.: F16L 37/12

(54) **SCHNELLANSCHLUSSKUPPLUNG**
COUPLING DEVICE FOR RAPID CONNECTION
DISPOSITIF D'ACCOUPLEMENT A RACCORD RAPIDE

(30) Priorität: 30.07.1996 DE 29612942 U
(43) Veröffentlichungstag der Anmeldung: 19.05.1999
(73) Patentinhaber: Weh GmbH, Verbindungstechnik, D-89257 Illertissen (DE)
(72) Erfinder: WEH, Wolfgang, D-89257 Illertissen (DE); WEH, Erwin, D-89257 Illertissen (DE)
(74) Vertreter: Fiener, Josef
(86) Internationale Anmeldenummer: EP9704133
(87) Internationale Veröffentlichungsnummer: WO9804866

(56) Entgegenhaltungen:
- WO-A-93/20378
- DE-A- 3 815 350
- DE-U- 29 500 808
- DE-U- 29 613 134

## Beschreibung

Die Erfindung betrifft eine Schnellanschlußkupplung für die Übertragung von gasförmigen und/oder flüssigen Fluiden, insbesondere zum Füllen von Fahrzeug-Gastanks.

Mit derartigen Schnellanschlußkupplungen soll eine sichere, dichte sowie schnell anschließbare Steckkupplung zum Übertragen eines Fluids von einer Druckquelle, beispielsweise von einer Betankungsanlage aus erreicht werden. Besonders wichtig ist hierbei die einfache, problemlose Bedienbarkeit der Schnellanschlußkupplung, so daß auch bei ungünstigen Bedingungen, wie gefährlichen Fluiden oder bei hohen Anschlußdrücken eine problemlose Handhabung ermöglicht wird.

Eine derartige Schnellanschlußkupplung ist in der EP-A-0 340 879 des Anmelders beschrieben, wobei die Schnellanschlußkupplung ein Gehäuse mit einem Fluideinlaß und einem Fluidauslaß aufweist, sowie mehrere Ventile vorgesehen sind, um eine sichere Abdichtung der Schnellanschlußkupplung bis zur vollständigen Herstellung der Verbindung zu gewährleisten. Diese Ventile werden dabei nach Ansetzen der Schnellanschlußkupplung durch Drehen eines Steuerungshebels in einer bestimmten vorgegebenen Reihenfolge geschaltet, wobei zuerst durch das Aufschieben der Schnellanschlußkupplung an einen Anschlußnippel das Auslaßventil geöffnet wird, dann bei weiterer Bewegung eines Steuerungshebels die als Verriegelungselemente dienenden Spannzangen geschlossen werden und schließlich das Einlaßventil geöffnet wird. Der Steuerungshebel ist hierbei über eine Exzenterwelle mit der Schiebehülse für die Beaufschlagung der Spannzangen und mit einem Dichtkolben in Eingriff, der auch den Fluideinlaß nach erfolgtem Anschluß der Steckkupplung freigibt.

Obwohl hierdurch eine besonders sichere Anschlußmöglichkeit geschaffen wird, ist der Anschluß dieser Kupplung bei großen Durchlaßquerschnitten (z. B. der Busbetankung) aufgrund des Aufschiebens des Rückschlagventils gegen eine Betätigungsfeder relativ kraftaufwendig, wobei neben dem Aufstecken der Kupplung das Betätigen des Steuerungshebels erforderlich ist, so daß eine Einhand-Bedienung kaum möglich ist.

Aus der WO-A-93/20378 des Anmelders ist weiterhin ein derartiger Schnellanschluß, insbesondere zum Füllen von Gasflaschen bekannt, wobei im Bereich des Auslasses eine Schnellanschlußvorrichtung in Form von Spannzangen mit einem Eingriffprofil vorgesehen ist. Hierbei ist auch ein in dem Kupplungsgehäuse gleitend verschiebbarer, hohler Dichtkolben beschrieben, der über eine mit einer Schiebehülse verbundenen Betätigungseinrichtung für das Schließen bzw. Öffnen der Spannzangen verbunden ist. Auch hier ist ein Aufsetzen der Kupplung unter Axialdruck ("Andrücken") erforderlich, während beim Abkuppeln durch Restdruck ein Rückstoß auftreten kann.

Demzufolge liegt der Erfindung die Aufgabe zugrunde, eine Schnellanschlußkupplung der eingangs genannten Art zu schaffen, die bei einfachem Aufbau eine sichere und besonders einfache Handhabung ermöglicht.

Diese Aufgabe wird gelöst durch eine Schnellanschlußkupplung gemäß den Merkmalen des Anspruches 1. Bevorzugte Weiterbildungen der Erfindung sind Gegenstand der Unteransprüche.

Die vorgeschlagene Schnellanschlußkupplung zeichnet sich durch eine besonders einfache Bedienung aus, da die Schnellanschlußkupplung auf dem Gegenanschluß in Axialrichtung kraftfrei aufgesetzt bzw. rückstoßfrei abgekuppelt werden kann. Insbesondere für die bevorzugte Ausführungsform zur Befüllung von Fahrzeug-Gastanks wird zudem beim Anschluß bzw. beim Lösen der Schnellanschlußkupplung sicher vermieden, daß Gas beim Betankungsvorgang austreten kann. Dies ist insbesondere aus Umweltschutzgründen wichtig, da bei den heute gebräuchlichen Anschlußkupplungen bei jedem Füllvorgang ein erhebliches Gasvolumen verlorengeht, das beim An- bzw. Abkuppeln entweichen kann.

Insbesondere wird durch das einfache, kraftfreie Aufsetzen auch vermieden, daß der Gegenanschluß bzw. die Verriegelungselemente und zugehörige Dichtungen durch übermäßige Kraftanwendung oder "schiefes" Aufsetzen beschädigt werden können. Es sei darauf hingewiesen, daß sich die vorgeschlagene Schnellanschlußkupplung für verschiedene Anschlüsse eignet, insbesondere für Anschlußnippel mit einer Außenumfangsnut. Zum Anschluß der Kupplung können jedoch auch andere Profilformen wie Einstiche, Gewinde oder Wülste an dem Anschlußnippel vorgesehen sein, wobei die Eingriffsprofilform der Spannzangen korrespondierend ausgebildet ist.

Durch den unter Druckbeaufschlagung teleskopierbaren, axial verschiebbaren Dichtkolben wird hierbei ein sicherer Eingriff am Gegenanschluß ermöglicht, da sich mit Verschiebung des druckbeaufschlagten Ringkolbens und axialer Verschiebung des Dichtkolbens eine nahezu simultane Öffnung des Auslaßventils ergibt. Durch diesen formschlüssigen Eingriff infolge der Teleskopbewegung kann der entsprechende Anschlußnippel, z. B. für einen Gastank, relativ einfach aufgebaut werden, und dennoch wird durch die Axialbeweglichkeit des Dichtkolbens bei bereits verriegelten Spannzangen eine sichere Abdichtung der Schnellanschlußkupplung mit sicherem Eingriff in das Anschlußprofil des Anschlußnippels erreicht. Auch wird durch das rückstoßfreie Abkuppeln ein übermäßiger Verschleiß oder eine Beschädigung des Anschlußprofiles sowohl kupplungs- als auch nippelseitig sicher vermieden, sowie ein kostengünstiger, einfacher Aufbau des Gegenanschlusses (Anschlußnippels) erreicht.

Nachfolgend wird ein Ausführungsbeispiel anhand der beiliegenden Zeichnungen näher erläutert und beschrieben. Hierin zeigen:
- Fig. 1: eine Seitenansicht einer Schnellanschlußkupplung für einen Anschlußnippel mit einem Anschlußprofil, wobei die Schnellanschlußkupplung im Längs-Halbschnitt und in der Stellung kurz vor dem Anschluß dargestellt ist; und
- Fig. 2: eine ähnliche Darstellung der Schnellanschlußkupplung in angekuppelter Stellung an den Anschlußnippel.

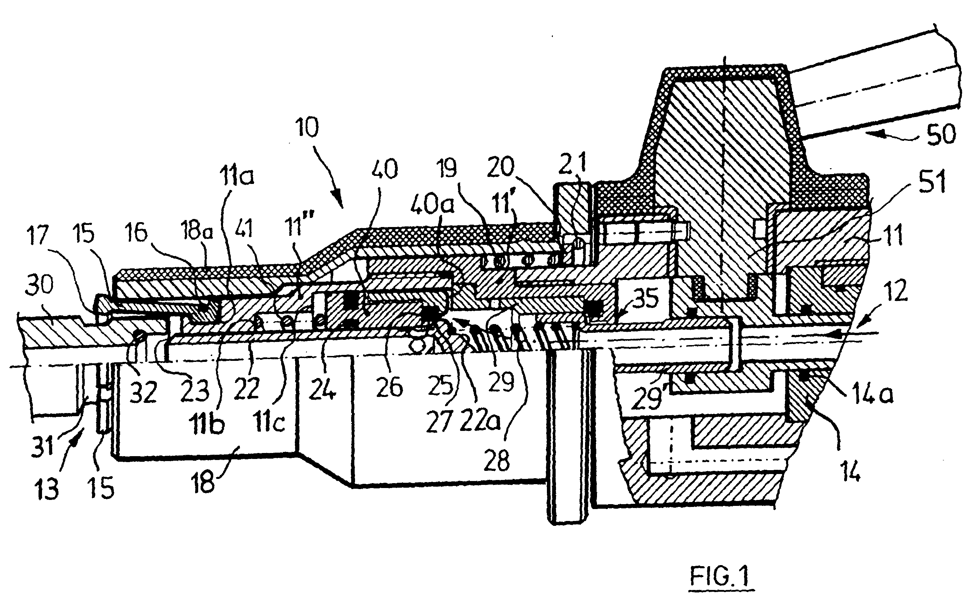

In Fig. 1 ist ein bevorzugtes Ausführungsbeispiel einer Schnellanschlußkupplung 10 kurz vor dem Anschluß an einen Anschlußnippel 30 gezeigt. Die Schnellanschlußkupplung 10 weist ein rohrförmiges Gehäuse 11 mit mehreren miteinander verschraubten Gehäuseteilen 11' und 11" auf, wobei hier die rechte Stirnseite als Einlaß 12 dient und die linke Stirnseite als Auslaß 13 für die Weiterleitung des zu übertragenden Fluids an den Anschlußnippel 30. Der Einlaß 12 zu dem Gehäuse 11 weist einen Anschlußadapter 14 auf, der in das Gehäuse 11 eingeschraubt und über eine Dichtung 14a gegen das Gehäuse 11 abgedichtet ist. Der Anschlußadapter 14 weist an seinem hier rechten Ende z. B. ein nicht dargestelltes Gewinde auf, an das ein Schlauch oder eine Leitung zur Zuführung des Fluids angeschlossen werden kann. Der Anschlußadapter 14 kann hierbei in Anpassung an das zu übertragende Fluid, insbesondere an die jeweils gewünschten Zuführwinkel, Durchlaßquerschnitte usw. gestaltet sein.

Auf der dem Anschlußadapter 14 gegenüberliegenden Auslaßseite sind mehrere, in Rohrform angeordnete, längliche Spannzangen 15 vorgesehen, die in der hier dargestellten Stellung kurz vor dem Aufstecken auf den Anschlußnippel 30 radial nach außen aufgespreizt sind, wie dies beispielsweise auch in der vorstehend genannten WO-A-93/20378 dargestellt ist. Die länglichen Spannzangen 15, von denen um das vordere Gehäuseteil 11" herum wenigstens drei, im allgemeinen sechs derartiger Spannzangen 15 angeordnet sind, sind an ihrem hier rechten Ende an einer Ringnut lla des Gehäuseteils 11" eingehängt und dabei durch eine Ringfeder 16 vorgespannt, so daß die Spannzangen 15 radial nach außen aufgespreizt werden. An dem hier linken äußeren Ende mit nach innen abgekröpften Flächen weisen die Spannzangen 15 jeweils korrespondierend zu einem nutförmigen Anschlußprofil 31 des Anschlußnippels 30 ausgebildete formschlüssige Eingriffsprofile 17 auf, so daß bei der Ausführung mit einer Außenumfangsnut am Anschlußnippel 30 ein entsprechend ausgebildetes Profil an den radial nach innen gerichteten Flächen des Eingriffsprofils 17 gegenüberliegt.

Um die Spannzangen 15 herum ist eine äußere, zum Anschlußnippel hin verjüngte Schiebehülse 18 vorgesehen, die an dem zylindrischen Außenmantel des Gehäuseteils 11' geführt ist und mit einer Druckfeder 19 in Richtung vom Anschlußnippel 30 weg vorgespannt ist. Die Druckfeder 19 stützt sich hierbei über einen Abstützring 20 und einen Federring 21 an einer Abstufung des Gehäuseteils 11' ab und schiebt somit die Schiebehülse 18 zu einem Steuerungs- oder Betätigungshebel 50 mit einer Exzenterwelle 51 hin. Deren Aufbau ist im eingangs genannten Stand der Technik näher beschrieben, so daß hier auf eine weitere Erläuterung verzichtet werden kann.

An der zum Auslaß 13 hin gelegenen Innenumfangsfläche des Gehäuseteils 11'' ist ein hohler Dichtkolben 22 geführt, der an seiner vorderen Stirnseite eine konische Dichtfläche 23 zur Anlage an einem Dichtring 32 des Anschlußnippels 30 aufweist. Der Dichtkolben 22 selbst ist gegenüber den außenliegenden Teilen mittels eines eingesetzten Dichtungsringes 24 abgedichtet, so daß das im wesentlichen entlang der Zentralachse der Schnellanschlußkupplung 10 strömende gasförmige und/oder flüssige Fluid nicht nach außen hin austreten kann.

Von Bedeutung ist weiterhin ein stirnseitig am Dichtkolben 22 gebildetes Auslaßventil 25, das mittels eines Dichtringes als Ventilsitz 26 gegenüber einer Dichtfläche 27 am Dichtkolben 22 in geschlossener Stellung abdichtet. Dieses Auslaßventil 25 ist hierbei von einer Druckfeder 28 beaufschlagt, die mittels eines Einsatzes 29 geführt ist und sich gegen das Gehäuseteil 11' abstützt. Durch dieses Auslaßventil 25 wird sichergestellt, daß in der hier dargestellten abgekuppelten Position bzw. bis kurz vor dem Anschluß der Schnellanschlußkupplung 10 an den Anschlußnippel 30 das durch den Anschlußadapter 14 zugeführte Fluid nicht ausströmen kann.

Um das Auslaßventil 25 herum ist ein Ringkolben 40 angeordnet, der beim Aufstecken der Schnellanschlußkupplung 10 auf den Anschlußnippel 30 mit dem Dichtkolben 22 zusammenwirkt, wobei letzterer beim Anschließen entlang der Anschlußnippel-Achse verschoben wird und hierbei eine zurückgezogene Position einnimmt, die ein kraftfreies Aufsetzen auf den Gegenanschluß ermöglicht. Dem in dieser Stellung geschlossenen Auslaßventil 25 der Schnellanschlußkupplung 10 liegt weiterhin ein in den Einsatz 29 eingefügter Schaft 29' gegenüber, der zum einen der exakten Führung der Druckfeder 28 dient und zusammen mit einer Abstufung des Einsatzes 29 ein Entlüftungsventil 35 bildet. Dieses auch von der Exzenterwelle 51 angesteuerte Entlüftungsventil 35 dient beim Abkuppeln zum Druckabbau.

Von besonderer Bedeutung ist hierbei der am Außenumfang des Dichtkolbens 22 geführte Ringkolben 40, der von einer Druckfeder 41 beaufschlagt ist. Die Druckfeder 41 stützt sich hierbei an einem Bund 11b des Gehäuseteils 11'' ab. Wie aus der Darstellung in Fig. 1 ersichtlich, wird der Ringkolben 40 hierbei von der Druckfeder 41 bis zu dem nach innen hin abgekröpften Bereich des Einsatzes 29 geschoben, wodurch zugleich ein Anschlag der Verschiebebewegung des Ringkolbens 40 auf dem Dichtkolben 22 erreicht wird, da die zum Einlaß 12 hin weisende Stirnfläche 40a des Ringkolbens 40 an dieser Abstufung anliegt. Da der Dichtkolben 22 in die gegenüberliegende Ausnehmung des Anschlußnippels 30 axial verschiebbar ist, ist zwischen Ringkolben 40 und dem Dichtkolben 22 auch eine relative Axialbeweglichkeit dieser beiden Bauteile zueinander ermöglicht.

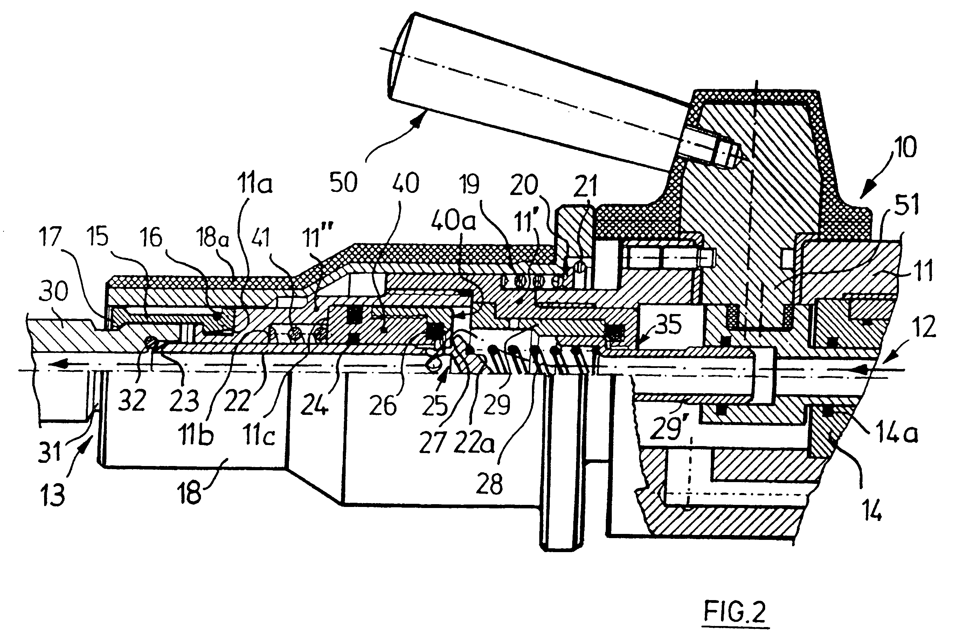

In Fig. 2 ist die Anschlußstellung der Schnellanschlußkupplung dargestellt. Wie ersichtlich, wird beim Aufstecken der Schnellanschlußkupplung 10 auf den Anschlußnippel 30 das Eingriffsprofil 17 der Spannzangen 15 mit dem Anschlußnippel 30 in Eingriff gebracht. Durch Betätigung ( bevorzugt ein Verdrehen um ca. 90 bis 180°) des Steuerungshebels 50 wird die Schiebehülse 18 über die Spannzangen 15 geschoben und diese somit verriegelt. Die Schiebehülse 18 kann dabei zur Vermeidung von Beschädigungen angrenzender Fahrzeugteile mit einer Ummantelung 18a aus Gummi oder Kunststoff versehen sein. Bei Druckbeaufschlagung (Beginn des Betankungsvorganges) wird der Dichtkolben 22 mit Unterstützung der Feder 28 zusammen mit dem Ringkolben 40 gegen die Federkraft der Druckfeder 41 nach links verschoben, da der Druck auf eine relativ große Stirnfläche 40a des Ringkolbens 40 wirkt. Bei Anlage des Dichtringes 32 an der Dichtfläche 23 wird unter weiterer Verschiebung des Ringkolbens 40 zudem der Ventilsitz 26/27 am Dichtkolben 22 geöffnet, bis der Ringkolben 40 in Berührung mit dem am Außenumfang abstehenden Bund llc gelangt. Nach einem geringen Weg von einigen Millimetern wird somit der an der Innenfläche des Ringkolbens 40 anliegende Ventilsitz 26 aus seiner Sperrstellung bewegt. Dabei hat das Eingriffsprofil 17 an dem korrespondierend ausgebildeten Anschlußprofil 31 des Anschlußnippels 30 bereits eingegriffen, wobei durch die Axialbewegung der Schiebehülse 18 diese über die radial äußeren Enden der Spannzangen 15 greift, so daß diese in ihrer Eingriffsstellung am Anschlußnippel 30 formschlüssig gehalten werden.

Es sei darauf hingewiesen, daß in der hier in Fig. 2 dargestellten Anschlußstellung der Dichtkolben 22 noch gegenüber dem Ringkolben 40 axial beweglich ist und auch durch die Druckfeder 28 auf den Dichtring 32 gedrückt wird. Von Bedeutung ist hierbei eine Stirnfläche 22a, die eine größere wirksame Fläche als im Bereich der Berührungsfläche zwischen dem Dichtring 32 und der Dichtfläche 23 aufweist. Hierdurch wird sichergestellt, daß gemäß der strichliert dargestellten Fluidströmung im wesentlichen entlang der Zentralachse der Schnellanschlußkupplung 10 der Dichtkolben 22 mit seiner Dichtfläche 23 mit steigendem Druck auch stärker gegen den Dichtring 32 angedrückt wird. Hierdurch wird eine Servowirkung, d. h. eine stärkere Anpresskraft des Dichtringes 32 mit steigendem Fluiddruck und damit eine besonders zuverlässige Abdichtung der Schnellanschlußkupplung 10 erreicht.

Zum Lösen der Schnellanschlußkupplung 10 und damit dem Zurückführen der in Fig. 2 dargestellten Anschlußstellung in die Öffnungsstellung gemäß Fig. 1 wird die Schiebehülse 18 nach Verdrehen des Steuerungshebels 50 von der Druckfeder 19 zurückgeschoben. Nach einem kurzen Weg können die Spannzangen 15 sich wieder radial nach außen aufspreizen. Da vorher der Fluiddruck unterbrochen wurde (z. B. Schließen eines Betankungs-und Einlaßventils und Öffnen des Entlüftungsventils 35), wird zudem der Ringkolben 40 unter der Wirkung der Druckfeder 41 hier nach rechts zur Einlaßseite 12 hin verschoben, da die Stirnfläche 40a nicht mehr druckbeaufschlagt ist.

Hierbei ist insbesondere die Gestaltung des Ringkolbens 40 von Bedeutung, da dieser ohne Beschädigungen des Eingriffsprofils 17 bzw. des Anschlußprofiles 31 ein sicheres und kraftfreies Aufstecken der Schnellanschlußkupplung 10 auf den Anschlußnippel 30 bzw. ein Abkuppeln davon erlaubt. Durch diese Axialverschiebbarkeit des Dichtkolbens 22 und seiner hieraus abgeleiteten Mitnahme durch den Ringkolben 40 in direkter Reihenfolge wird ermöglicht, den Anschluß- bzw. Abkuppelvorgang praktisch kraftfrei vorzunehmen.

## Patentansprüche

1. Schnellanschlußkupplung für die Übertragung von gasförmigen und/oder flüssigen Fluiden, insbesondere zum Füllen von Fahrzeug-Gastanks, umfassend:
- ein rohrförmiges Gehäuse (11);
- eine gegenüber dem Gehäuse verschiebbar gelagerte, äußere Schiebehülse (18);
- mehrere am Gehäuse befestigte, radial bewegbare Verriegelungselemente, insbesondere aufspreizbare Spannzangen (15), mit einem Eingriffsprofil zum Anschluß an einen korrespondierend ausgebildeten Anschlußnippel (30); und
- einen zentral im Gehäuse gleitend verschiebbaren Dichtkolben (22) zur Anlage an den Anschlußnippel (30);
dadurch gekennzeichnet, daß
dem Dichtkolben (22) ein im Gehäuse (11, 11', 11") axial verschiebbarer, federbeaufschlagter Ringkolben (40) zugeordnet ist, der in abgekuppelter Position der Schnellanschlußkupplung (10) den Dichtkolben (22) in zurückgezogener Position hält, sowie bei Druckbeaufschlagung relativ zum Dichtkolben (22) verschiebbar gelagert ist.

2. Schnellanschlußkupplung nach Anspruch 1,
dadurch gekennzeichnet, daß
eine gemeinsam auf den Dichtkolben (22) und den Ringkolben (40) wirkende Druckfeder (41) vorgesehen ist.

3. Schnellanschlußkupplung nach Anspruch 1 oder 2,
dadurch gekennzeichnet, daß
zwischen dem Dichtkolben (22) und dem Ringkolben (40) wenigstens ein Dichtring (24) vorgesehen ist.

4. Schnellanschlußkupplung nach einem der Ansprüche 1 bis 3,
dadurch gekennzeichnet, daß
der Dichtkolben (22) an der Innenfläche des Gehäuses (11'') und des Ringkolbens (40) geführt ist.

5. Schnellanschlußkupplung nach einem der Ansprüche 1 bis 4,
dadurch gekennzeichnet, daß
die dem Fluid zugewandte Stirnfläche (22a) des Dichtkolbens (22) eine größere wirksame Fläche aufweist als die axial gegenüberliegende Dichtfläche (23).

6. Schnellanschlußkupplung nach einem der Ansprüche 1 bis 5,
dadurch gekennzeichnet, daß
der Ringkolben (40) zum Einlaß (12) hin eine den Dichtkolben (22) umgebende Stirnfläche (40a) aufweist.

7. Schnellanschlußkupplung nach einem der Ansprüche 1 bis 6,
dadurch gekennzeichnet, daß
bei Druckbeaufschlagung mit Verschiebung des Ringkolbens (40) ein Auslaßventil (25) geöffnet ist, dessen Ventilsitz (26) im Ringkolben (40) angeordnet ist.

8. Schnellanschlußkupplung nach einem der Ansprüche 1 bis 7,
dadurch gekennzeichnet, daß
der axiale Verschiebeweg des Ringkolbens (40) größer bemessen ist als der Axialhub des Dichtkolbens (22).

9. Schnellanschlußkupplung nach einem der Ansprüche 1 bis 8,
dadurch gekennzeichnet, daß
der Ringkolben (40) zweiteilig ausgebildet ist.

10. Schnellanschlußkupplung nach einem der Ansprüche 1 bis 9,
dadurch gekennzeichnet, daß
die Schiebehülse (18) zum Auslaß (13) hin verjüngt ausgebildet ist.

11. Schnellanschlußkupplung nach einem der Ansprüche 1 bis 10,
dadurch gekennzeichnet, daß
die Schiebehülse (18) von einer Schutzummantelung (18a) aus Gummi oder Kunststoff umgeben ist.

## Claims

1. A coupling device for rapid connection for the transfer of gaseous and/or liquid fluids, particularly for filling vehicle fuel tanks, comprising:
- a tubular housing (11);
- an exterior sliding shell (18) which can be displaced with respect to the housing;
- several radially-movable locking elements affixed to the housing, in particular collets (15) which can be sprayed out with a section which engages for connecting to a correspondingly-shaped connection nipple (30); and
- a sealing piston (22) which can slide axially in the housing to seat on the connecting nipple (30);
characterized in that
a spring-loaded ring piston (40) axially displaceable in the housing (11, 11', 11'') be added to the sealing piston (22), which in the uncoupled position of the coupling device for rapid connection (10), holds the sealing piston (22) in a retracted position and, when put under pressure, is displaceably seated relative to the sealing piston (22).

2. Coupling device for rapid connection according to claim 1, characterized in that there is provided a compression spring (41) acting both on the sealing piston (22) and on the ring piston (40).

3. Coupling device for rapid connection according to claim 1 or claim 2, characterized in that at least one sealing ring (24) is provided between the sealing piston (22) and the ring piston (40).

4. Coupling device for rapid connection according to any of claims 1 to 3, characterized in that the sealing piston (22) is guided at the internal surface of the housing (11'') and of the ring piston (40).

5. Coupling device for rapid connection according to any of claims 1 to 4, characterized in that the front surface (22a) of the sealing piston (22) faces the fluid and has an effective surface area larger than that of the axially opposed sealing surface (23).

6. Coupling device for rapid connection according to any of claims 1 to 5, characterized in that the ring piston (40) includes a front surface (40a) located in the direction of its inlet (12) and surrounding the sealing piston (22).

7. Coupling device for rapid connection according to any of claims 1 to 6, characterized in that, when put under pressure causing a displacement of the ring piston (40), an outlet valve (25) is open, with its valve seat (26) being positioned in said ring piston (40).

8. Coupling device for rapid connection according to any of claims 1 to 7, characterized in that the axial displacement distance of the ring piston (40) has a larger dimension than that of the axial stroke of the sealing piston (22).

9. Coupling device for rapid connection according to any of claims 1 to 8, characterized in that the ring piston (40) exhibits a two-part form.

10. Coupling device for rapid connection according to any of claims 1 to 9, characterized in that the sliding shell (18) is backswept towards its outlet (13).

11. Coupling device for rapid connection according to any of claims 1 to 10, characterized in that the sliding shell (18) is enclosed by a protective sheathing (18a) made of rubber or plastic material.

## Revendications

1. Dispositif d'accouplement à raccord rapide pour transvaser des fluides gazeux et/ou liquides, notamment pour remplir des réservoirs de gaz de véhicules, comprenant :
■ un boîtier tubulaire (11):
■ une douille coulissante (18) montée de manière à pouvoir coulisser par rapport au boîtier ;
■ plusieurs éléments de verrouillage fixés au boîtier et mobiles radialement, notamment des pinces de serrage pouvant être écartées (15), comportant un profil d'enclenchement destiné à être raccordé à un manchon fileté (30) correspondant ; et
■ un piston d'étanchéité (22) pouvant coulisser au centre du boîtier, qui est destiné à venir s'appliquer contre le manchon fileté (30) ;
caractérisé en ce que
un piston annulaire (40) mobile axialement dans le boîtier (11, 11', 11") et sollicité par un ressort est associé au piston d'étanchéité (22), qui, lorsque le dispositif d'accouplement à raccord rapide (10) est désaccouplé, maintient le piston d'étanchéité (22) en position rétractée et qui, lorsqu'il est soumis à la pression, est monté de manière à coulisser par rapport au piston d'étanchéité (22).

2. Dispositif d'accouplement à raccord rapide selon la revendication 1, caractérisée en ce qu'est prévu un ressort de pression (41) agissant à la fois sur le piston d'étanchéité (22) et sur le piston annulaire (40).

3. Dispositif d'accouplement à raccord rapide selon la revendication 1 ou 2, caractérisé en ce qu'entre le piston d'étanchéité (22) et le piston annulaire (40) est prévue au moins une bague d'étanchéité (24).

4. Dispositif d'accouplement à raccord rapide selon l'une des revendications 1 à 3, caractérisé en ce que le piston d'étanchéité (22) est guidé sur la surface interne du boîtier (11") et du piston annulaire (40).

5. Dispositif d'accouplement à raccord rapide selon l'une des revendications 1 à 4, caractérisé en ce que la surface frontale (22a) du piston d'étanchéité (22) qui est tournée vers le fluide présente une surface active supérieure à la surface d'étanchéité (23) qui se situe à l'opposé dans la direction de l'axe.

6. Dispositif d'accouplement à raccord rapide selon l'une des revendications 1 à 5, caractérisé en ce que le piston annulaire (40) présente en direction de l'entrée (12) une surface frontale (40a) entourant le piston d'étanchéité (22).

7. Dispositif d'accouplement à raccord rapide selon l'une des revendications 1 à 6, caractérisé en ce que, lors de la mise sous pression avec déplacement du piston annulaire (40), une soupape de sortie (25) s'ouvre, dont le siège (26) est situé dans le piston annulaire (40).

8. Dispositif d'accouplement à raccord rapide selon l'une des revendications 1 à 7, caractérisé en ce que le déplacement axial du piston annulaire (40) est supérieur à la course axiale du piston d'étanchéité (22).

9. Dispositif d'accouplement à raccord rapide selon l'une des revendications 1 à 8, caractérisé en ce que le piston annulaire (40) est réalisé en deux parties.

10. Dispositif d'accouplement à raccord rapide selon l'une des revendications 1 à 9, caractérisé en ce que la douille coulissante (18) est réalisée se rétrécissant vers la sortie (13).

11. Dispositif d'accouplement à raccord rapide selon l'une des revendications 1 à 10, caractérisé en ce que la douille coulissante (18) est entourée par une enveloppe de protection (18a) en caoutchouc ou en matière plastique.
